# EUROPÄISCHE PATENTANMELDUNG

(11) **EP 4 042 912 A1**
(43) Veröffentlichungstag der Anmeldung: **17.08.2022**
(21) Anmeldenummer: 22155048.6
(22) Anmeldetag: 03.02.2022
(51) Int. Cl.: A47J 31/60

(54) **GESTEUERTER REINIGUNGSDAMPFSTOSS EINER HEISSGETRÄNKEZUBEREITUNGSMASCHINE**

(30) Priorität: 15.02.2021 DE 102021201391
(71) Anmelder: BSH Hausgeräte GmbH, 81739 München (DE)
(72) Erfinder: Henz, Manuel, 83410 Laufen (DE); Schnellinger, Christian, 83379 Wonneberg (DE); Sollmann, Martin, 83278 Traunstein (DE)

(57) **Zusammenfassung**

Ein Verfahren zum Betrieb eines Heißgetränkezubereitungsgeräts, das eine Dampferzeugungseinrichtung und einen Milchaufschäumer hat, und die Schritte a) Zubereiten von Milchschaum, b) Reinigen des Milchaufschäumers mithilfe eines Reinigungsdampfstoßes umfasst, wird dadurch weitergebildet, dass der Reinigungsdampfstoß einstellbar ist. Die Erfindung betrifft außerdem ein entsprechendes Heißgetränkezubereitungsgerät.

## Beschreibung

Die vorliegende Erfindung betrifft ein Verfahren zum Betrieb eines Heißgetränkezubereitungsgeräts, insbesondere für Haushaltsanwendungen, das eine Dampferzeugungseinrichtung und einen Milchaufschäumer hat, mit den Verfahrensschritten: Zubereiten von warmer Milch und/oder Milchschaum und Reinigen des Milchaufschäumers mithilfe eines Reinigungsdampfstoßes aus der Dampferzeugungseinrichtung. Die Erfindung betrifft außerdem eine entsprechende Vorrichtung zur Durchführung des Verfahrens.

Die EP 1 312 292 A1 betrifft ein Heißgetränkezubereitungsgerät, mit dem es möglich ist, Milchmixgetränke zuzubereiten. Der Milchaufschäumer wird automatisch nach jedem Milchschaumbezug gereinigt. Dazu wird der Dampfdruck um einen festen Wert reduziert.

Die Aufgabe der vorliegenden Erfindung ist es, ein besseres Zubereitungsergebnis eines Heißgetränkezubereitungsgeräts zu erzielen.

Die Aufgabe wird bei dem eingangs genannten Verfahren erfindungsgemäß dadurch gelöst, dass der Reinigungsdampfstoß des Milchaufschäumers einstellbar ist. Die Bezeichnung "Milchaufschäumer" bezieht sich auf den Milchaufschäumer selbst und alle Teile, die mit Milch in Berührung kommen.

Das Verfahren geht also von zwei Schritten aus. In einem ersten Schritt a) wird ein Getränk mit Milch oder Milchschaum, wie z. B. Milchkaffee, Cappuccino oder Latte Macchiato, zubereitet. In einem zweiten Schritt b) erfolgt die Reinigung der Milchpassage mithilfe eines Reinigungsdampfstoßes. Jener kann die optische Qualität des frisch zubereiteten Getränks beeinträchtigen, wenn er auf die Oberfläche des Getränks trifft. Erfindungsgemäß ist der Reinigungsdampfstoß daher einstellbar. Unter "einstellbar" wird verstanden, dass der Reinigungsdampfstoß sowohl ein- oder ausschaltbar ist als auch, dass er z. B. hinsichtlich seiner Intensität verstellbar ist. Die Erfindung wendet sich also davon ab, dass der Reinigungsdampfstoß nach jedem Milchschaumbezug automatisch und gleichartig erfolgt. Sie verfolgt vielmehr das Prinzip, dass der Reinigungsdampfstoß der Dampferzeugniseinrichtung beeinflussbar ist, und zwar sowohl hinsichtlich seiner grundsätzlichen Durchführung als auch in der Art und Weise seiner Durchführung.

Der Milchschaum wird regelmäßig mithilfe einer Dampferzeugungseinrichtung erzeugt, z. B. mit einem Durchlauferhitzer oder Thermoblock. Das Ansaugen der Milch in den Milchaufschäumer kann mithilfe einer Pumpe oder mithilfe eines Unterdruckerzeugers, z.B. nach dem Venturi-Prinzip erfolgen.

Die Einstellbarkeit des Reinigungsdampfstoßes erfordert die Eingabe oder Berücksichtigung verschiedener Angaben über seine Durchführung, und zwar spätestens unmittelbar vor dem Schritt b). Die Angaben können aber praktischerweise schon vorher, nämlich bei der nutzerseitigen Auswahl des gewünschten Getränks generiert werden. Sie können als Eingaben vom Nutzer stammen oder als Voreinstellungen geräteseitig hinterlegt sein. Der einstellbare Reinigungsdampfstoß bietet jedenfalls den Vorteil, dass er den Anforderungen an ein anspruchsvolles Zubereitungsergebnis oder auch den Gewohnheiten und Wünschen des Nutzers angepasst werden kann.

Nach einer vorteilhaften Ausgestaltung der Erfindung kann in einem Schritt i) die Angabe berücksichtigt werden, ob der Reinigungsdampfstoß unmittelbar nach dem Schritt a) durchgeführt wird oder ob der Reinigungsdampfstoß unterbleibt. Damit lässt sich der Reinigungsdampfstoß grundsätzlich abschalten. Dies hat den Vorteil, dass bei einer Abwahl des Reinigungsdampfstoßes die Getränkeoberfläche nicht beeinträchtigt werden kann.

Soll der Reinigungsdampfstoß durchgeführt werden, kann nach einer weiteren vorteilhaften Ausgestaltung der Erfindung in einem Schritt ii) vor dem Schritt b) eine Angabe zur Intensität des Reinigungsdampfstoßes berücksichtigt werden. Mit der Berücksichtigung einer geringeren Intensität des Reinigungsdampfstoßes wird der Milchaufschäumer zwar gereinigt und von Milchrückständen befreit, allerdings wird die Oberfläche des zubereiteten Getränks zumindest weniger beeinträchtigt. Anderenfalls kann eine höhere Intensität eingestellt werden, wenn eine optische Beeinträchtigung des Getränks bewusst in Kauf genommen wird, wenn der Benutzer in Erwartung des stärkeren Dampfstoßes das Getränk vorher entnimmt oder wenn der Getränketyp ohnehin eine weitgehend "unempfindliche" Getränkeoberfläche bietet, wie zum Beispiel Milchkaffee.

Nach einer weiteren vorteilhaften Ausgestaltung der Erfindung kann in einem Schritt iii) vor dem Schritt b) eine Angabe berücksichtigt werden, wie lange der Reinigungsdampfstoß dauern soll. Damit kann das Reinigungsergebnis beeinflusst werden. Die Dauer und die Intensität des Reinigungsdampfstoßes lassen sich ggf. miteinander koppeln. So lässt sich eine hohe Intensität mit einer kurzen Dauer oder vor allem eine geringe Intensität mit einer längeren Dauer kombinieren, um ein gewünschtes Reinigungsergebnis zu erhalten.

Nach einer weiteren vorteilhaften Ausgestaltung der Erfindung können die Angaben aus den Schritten i) und/oder ii) und/oder iii) in Abhängigkeit von dem Getränketyp gewählt werden und/oder von der Anzahl der zubereiteten Getränke, nach dem der Schritt b) erfolgen soll. Die Abhängigkeit des Reinigungsdampfstoßes vom Getränketyp kann dazu führen, dass beispielsweise bei einem Cappuccino der Reinigungsdampfstoß grundsätzlich nicht durchgeführt wird. Die Feinporigkeit seiner Milchschaumoberfläche lässt sich damit aufrechterhalten. Bei einem Latte Macchiato dagegen kann die Feinporigkeit des Milchschaums eine untergeordnete Rolle spielen, sodass der Reinigungsdampfstoß eher zugelassen werden kann.

Die Abhängigkeit des Reinigungsdampfstoßes von der Anzahl der Getränke kann bedeuten, dass nach beispielsweise vier Cappuccinos der Reinigungsdampfstoß durchgeführt wird. Bei dem vierten Getränk kann es sich um das Getränk des Nutzers handeln, bei den vorherigen drei Getränken um die für seine Gäste. Eine vergleichbare geräteseitige Einstellung kann den Nutzer auf den Reinigungsdampfstoß nach dem vierten Getränk hinweisen und vom Reinigungsbedarf getragen sein.

Ebenso können die Dauer und die Intensität des Reinigungsdampfstoßes vom Getränketyp abhängig sein, wie oben anhand Cappuccino vs. Latte Macchiato erläutert. Die Abhängigkeit des Reinigungsdampfstoßes von der Anzahl der zubereiteten Getränke hängt mit dem Reinigungsbedarf zusammen, der mit jedem Zubereitungsvorgang selbstverständlich steigt.

Grundsätzlich können die Angaben aus den Schritten i) bzw. ii) bzw. iii) und des Getränketyps und der Getränkeanzahl beliebig miteinander kombiniert werden. So kann beispielsweise nach einem Cappuccino der Reinigungsdampfstoß nie, kürzer oder nicht so intensiv durchgeführt werden wie bei einem Latte Macchiato.

Beispielsweise kann bei hoher Nutzungsintensität eine weniger vollständige Reinigung der milchberührten Flächen nach jeder Getränkezubereitung mit Milchbeteiligung hingenommen werden. Bei einer längeren Benutzungspause dagegen soll eine zuverlässige Reinigung sichergestellt sein. In einer weiteren vorteilhaften Ausführung der Erfindung kann daher in einem Schritt iv) die Angabe berücksichtigt werden, dass das Heißgetränkezubereitungsgerät ausgeschaltet werden soll. Dabei kann es sich im eine Benutzereingabe zum Ausschalten des Zubereitungsgerät handeln. Alternativ kann es sich um eine zeitabhängige geräteseitige Aufforderung handeln, um Energie zu sparen. Daraufhin werden erfindungsgemäß die Schritte c) und d) durchgeführt:
Im Schritt c) wird der Verschmutzungsgrad abgefragt. Er kann sich aus der Art und der Anzahl der zubereiteten Getränke ergeben und zusätzlich die konkreten Angaben zum Reinigungsdampfstoß berücksichtigen. Überschreitet der Verschmutzungsgrad einen werkseitig festgelegten Schwellwert, wird in einem Schritt d) ein Reinigungsdampfstoß durchgeführt, der geräteseitig festeingestellt ist. Er ist also durch die Angaben in den Schritten i) bzw. ii) bzw. iii) nicht verstellbar. Falls das Heißgetränkezubereitungsgerät ausgeschaltet wird, bevor eine ausreichende Reinigung stattgefunden hat, wird der Reinigungsdampfstoß durchgeführt, um die Dampferzeugungseinrichtung zuverlässig von Milchresten zu befreien. Damit kann eine ausreichende Hygiene auch bei einstellbarem und insbesondere abwählbarem Reinigungsdampfstoß sichergestellt werden.

In einer weiteren vorteilhaften Ausführung der Erfindung können alle oder ein Teil der Angaben entweder vom Nutzer getroffen werden oder geräteseitig voreingestellt sein. So kann beispielsweise die Durchführung des Reinigungsdampfstoßes abhängig von dem Getränketyp voreingestellt sein, seine Dauer und Intensität aber können nutzerseitig gewählt werden. Der Umfang an Wahlmöglichkeiten zum Einstellen des Reinigungsdampfstoßes, die der Benutzer erhält, kann vom Gerätetyp des Zubereitungsgeräts und vom Komfort abhängig sein, den es bieten soll.

Die oben genannte Aufgabe richtet sich auch an die eingangs genannte Vorrichtung. Dabei handelt es sich um ein Heißgetränkezubereitungsgerät, insbesondere für Haushaltsanwendungen, zur Durchführung des obigen Verfahrens, mit einer Dampferzeugniseinrichtung, mit einem Milchaufschäumer, der sich mit einem Reinigungsdampfstoß aus der Dampferzeugungseinrichtung reinigen lässt, und einer Steuerungseinrichtung insbesondere zur Steuerung des Reinigungsdampfstoßes. Bekanntlich lässt sich die Steuerungseinrichtung bei der Getränkewahl geräteseitig und benutzerseitig mittelbar bedienen, indem der Benutzer getränketypabhängige Zubereitungsverfahren auswählt. Die oben genannte Aufgabe wird erfindungsgemäß nun dadurch gelöst, dass die Steuerungseinrichtung geräteseitig oder vom Nutzer auch zur Steuerung des Reinigungsdampfstoßes bedienbar ist. Erfindungsgemäß lässt sich der Reinigungsdampfstoß nun einstellen und die oben genannten Angaben können so getroffen werden. Mit den oben beim Verfahren beschriebenen Einstellmöglichkeiten des Reinigungsdampfstoßes bietet das Zubereitungsgerät dem Benutzer einen höheren Komfort, sei es durch weitere nutzerseitige Wahlmöglichkeiten oder durch geräteseitige Berücksichtigung unterschiedlicher Zubereitungssituationen. Jedenfalls lässt sich, wie oben beschrieben, ein verbessertes Zubereitungsergebnis erzielen.

Das Prinzip der Erfindung wird im Folgenden anhand einer Zeichnung beispielshalber noch näher erläutert. In der Zeichnung zeigen:
Figur 1: ein Ablaufdiagramm des erfindungsgemäßen Verfahrens, und
Figur 2: eine schematische Übersicht über die Kombinationsmöglichkeiten der Erfindung.

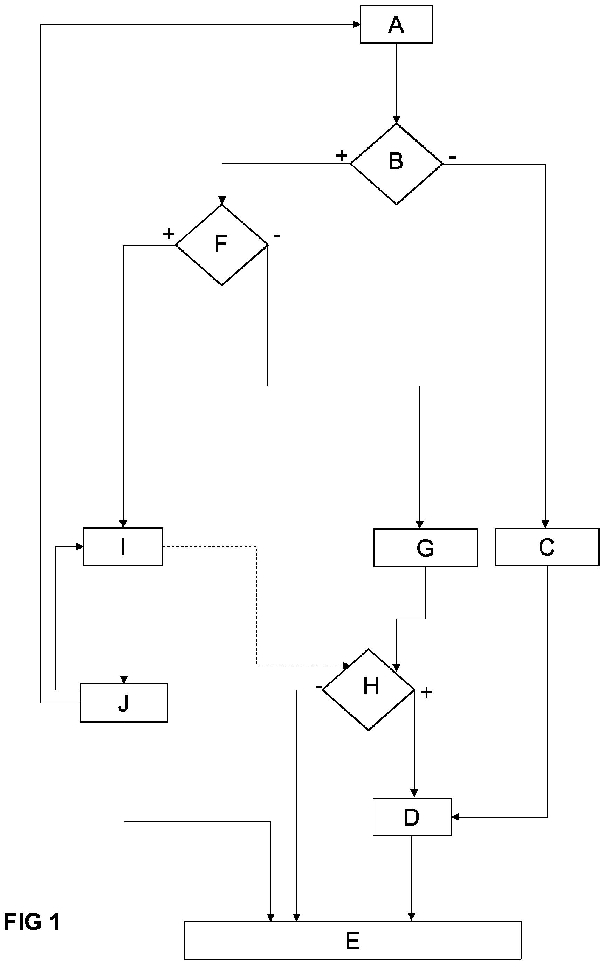

Figur 1 zeigt einen schematischen Ablauf des vorliegenden Verfahrens. Es ist Bestandteil bzw. Ausschnitt eines Verfahrens zur Zubereitung eines Kaffeegetränks in einem Heißgetränkezubereitungsgerät bzw. Kaffeevollautomaten unter Beteiligung von Milch. Besonders Milch als leicht verderbliches Naturprodukt erfordert Maßnahmen zum Aufrechterhalten der Hygiene derjenigen Flächen, die mit Milch in Kontakt gekommen sind. Dazu nutzt der Kaffeevollautomat seine Dampferzeugungseinrichtung, um die Kontaktflächen mit Heißdampf in der Form eines Dampfstoßes von Milchrückständen zu befreien.

Eine zuverlässige Reinigung erfolgt direkt nach jeder Getränkezubereitung unter Beteiligung von Milch. Allerdings kann der dann austretende Reinigungsdampfstoß das bereits zubereitete Getränk optisch beeinträchtigen, indem er beispielsweise die Milchschaumoberfläche eines Latte Macchiato verunziert. Erfindungsgemäß kann der Reinigungsdampfstoß daher geeignet eingestellt werden:
Als Ausgangspunkt A für das Verfahren dient eine Aufforderung einer Getränkezubereitung an den Kaffeevolllautomaten. Bevor die Getränkezubereitung durchgeführt wird, kann in Schritt B gewählt werden, ob unmittelbar anschließend an die Getränkezubereitung die an sich übliche Reinigung mittels Reinigungsdampfstoßes durchgeführt werden soll oder nicht.

Soll die Reinigung während einer Betriebsphase des Kaffeevollautomaten nicht durchgeführt werden, wird das gewünschte Getränk ohne den sonst anschließenden Reinigungsdampfstoß in Schritt C zubereitet. Anschließend können in gleicher Weise noch weitere Getränke zubereitet werden. Wird dann das Heißgetränkezubereitungsgerät am Ende der Betriebsphase, beispielsweise am Abend, ausgeschaltet, wird in Schritt D vor dem endgültigen Stromlosschalten des Kaffeevollautomaten in Schritt E ein standardisierter und werkseitig festgelegter Reinigungsdampfstoß durchgeführt und der Milchaufschäumer damit zuverlässig gereinigt.

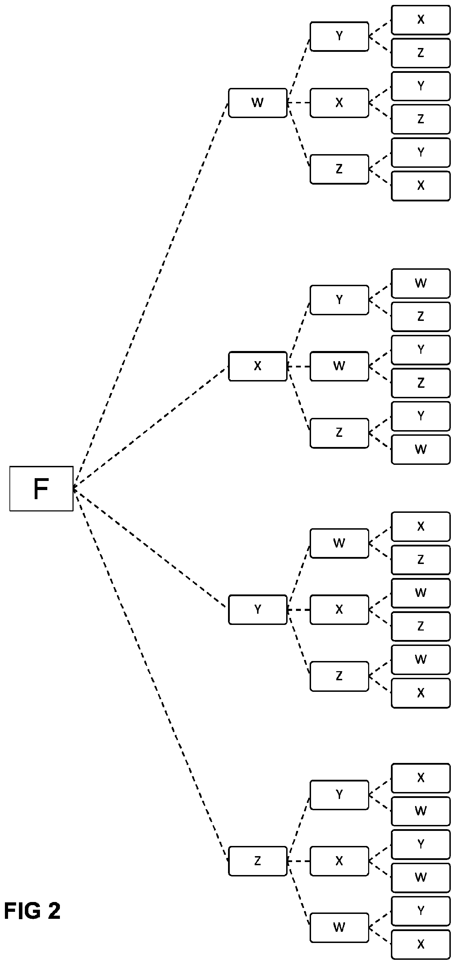

Soll dagegen gemäß Schritt B die Reinigung durchgeführt werden, kann der Nutzer im Schritt F eine Auswahl treffen, ob der Reinigungsdampfstoß in Abhängigkeit der Dauer, Intensität, Anzahl der Getränke oder des Getränketyps bzw. aus einer Kombination aus den Wahlmöglichkeiten durchgeführt werden soll. Anderenfalls wird die Reinigung des Milchaufschäumers nach werkseitigen Voreinstellungen durchgeführt. Die nutzer- oder geräteseitigen Auswahlmöglichkeiten des Schritts F werden im Einzelnen in der Fig. 2 dargestellt und beschrieben.

Wird die Reinigung gemäß den geräteseitigen Voreinstellungen durchgeführt, wird das Milchmixgetränk in einem Zubereitungsschritt G zubereitet. Der Schritt G kann angabengemäß auch mehrere Getränkezubereitungen umfassen, zum Beispiel, weil vier Cappuccino-Zubereitungen ohne dazwischen erfolgenden Reinigungsdampfstoß eingestellt wurden.

Vor dem Erreichen des Schritts E fragt das Zubereitungsgerät in einem Schritt H seinen Verschmutzungsgrad ab, zum Beispiel bevor es automatisch abschalten will. Bei einer Verschmutzung jenseits eines Schwellwerts führt es den standardisierten Reinigungsdampfstoß in Schritt D durch. Sollte der Verschmutzungsgrad wegen planmäßiger und ausreichender Reinigungsdampfstöße zwischen den Getränkezubereitungen unterhalb des Schwellwerts liegen, unterbleibt der standardisierte Reinigungsdampfstoß des Schritt D.

Soll der Reinigungsdampfstoß nicht nach werkseitigen Voreinstellungen durchgeführt werden, lässt er sich nach mindestens vier Kriterien definieren. Dazu kann sich der Nutzer in Schritt F zwischen verschiedenen Wahlmöglichkeiten entscheiden (s. auch Fig. 2). So kann der Nutzer grundsätzlich wählen, in welcher Intensität, mit welcher Dauer, nach welcher Getränkeanzahl oder nach welchem Getränketyp der Reinigungsdampfstoß durchgeführt werden soll. Auch Kombinationen der Wahlmöglichkeiten und deren Abhängigkeiten untereinander sind denkbar, beispielsweise, dass die einstellbare Intensität des Reinigungsdampfstoßes abhängig ist von der Getränkeanzahl, nach der er stattfinden soll.

Es müssen dem Benutzer auch nicht alle vier Wahlmöglichkeiten in gleicher Weise zur Verfügung stehen. So kann beispielsweise nur ein Kriterium wählbar sein, wie beispielsweise eine Getränkeanzahl, die ohne Reinigungsdampfstoß dazwischen auskommen soll. Daraufhin werden geräteseitig die übrigen Kriterien, nämlich die Dauer und die Intensität in Abhängigkeit vom Getränketyp ermittelt.

Anschließend wird das Getränk oder die gewählte Anzahl an Getränken in einem Schritt I zubereitet. Daraufhin erfolgt im Schritt J der Reinigungsdampfstoß nach der Wahl in Schritt F. Jetzt kann erneut die grundsätzliche Entscheidung für oder gegen einen Reinigungsdampfstoß während der Getränkezubereitung gemäß Schritt B abgefragt werden oder auch die weitere Getränkezubereitung in Schritt I nach der in Schritt F getroffenen Auswahl erfolgen.

Unmittelbar nach einem Reinigungsdampfstoß im Schritt J kann das Zubereitungsgerät in einem Schritt E ausgeschaltet werden, entweder durch eine Nutzereingabe oder automatisch. Soll das Heißgetränkezubereitungsgerät ausgeschaltet werden, ohne dass aufgrund der Wahl im Schritt F ein Reinigungsdampfstoß durchgeführt wurde, wird in Schritt H der Verschmutzungsgrad des Zubereitungsgeräts abgefragt. Liegt die Verschmutzung über einem werkseitig festgelegten Schwellwert, wird in Schritt D der standardisierte Reinigungsdampfstoß durchgeführt. Anderenfalls kann er unterbleiben. Anschließend wird in Schritt E das Gerät ausgeschaltet.

Fig. 2 zeigt eine schematische Übersicht über die Kombinationsmöglichkeiten im Schritt F der Fig. 1, die als Angaben für die Einstellbarkeit des Reinigungsdampfstoßes berücksichtigt werden können. Es sind drei Wahlebenen dargestellt. Die drei Ebenen stellen die grundsätzlichen Möglichkeiten der Wahl der Angaben dar, nämlich über die Intensität W des Reinigungsdampfstoßes, die Getränkeanzahl X, nach der ein Reinigungsdampfstoß durchgeführt werden soll, die Dauer Y des Reinigungsdampfstoßes oder der Getränketyp Z, nach dem der Reinigungsdampfstoß durchgeführt werden soll. Außerdem zeigt Fig. 2 die jeweiligen Kombinationsmöglichkeiten. Sie bieten dem Benutzer eine große Bandbreite, den Reinigungsdampfstoß zu beeinflussen. Die Angaben erfolgen entweder benutzerseitig oder geräteseitig. In jeder Ebene können einige oder alle Angaben vom Nutzer gewählt werden. Die evtl. verbleibenden Angaben werden dann geräteseitig bestimmt. Die Angaben können logisch voneinander abhängen und daher miteinander kombiniert werden, beispielsweise die Intensität und die Dauer des Reinigungsdampfstoßes, weil sie wechselweise seine Effizienz bestimmen.

Beispielsweise kann der Nutzer in einem ersten Schritt die Angabe über die Getränkeanzahl X, nach der ein Reinigungsdampfstoß durchgeführt werden soll, auswählen. Daraufhin hat er die Möglichkeit, die Anzahl der Getränke festzulegen, die er unterbrechungsfrei, das heißt ohne Reinigungsdampfstoß zwischen den Getränkezubereitungen, beziehen möchte. Die Dauer und die Intensität des Reinigungsdampfstoßes bestimmt jetzt das Zubereitungsgerät in Abhängigkeit von der Verschmutzung durch die gewählte Zubereitungsphase. Eine weitere Möglichkeit ist, dass der Getränketyp, nach dem gereinigt werden soll, sowie die Intensität und die Dauer des Reinigungsdampfstoßes nutzerseitig eingestellt werden Die Anzahl der mit dieser Einstellung unterbrechungsfrei herstellbaren Getränke bestimmt dann das Zubereitungsgerät.

Da es sich bei den vorhergehenden, detailliert beschriebenen Verfahren um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Wahl in Schritt F in anderer Form als in der hier beschriebenen erfolgen. Außerdem schließt die Verwendung der unbestimmten Artikel "ein" bzw. "eine" nicht aus, dass die betreffenden Merkmale auch mehrmals oder mehrfach vorhanden sein können.

### Bezugszeichenliste

- A: Ausgangspunkt
- B: Wahl der Reinigung
- C: Zubereitung Getränk
- D: Reinigungsdampfstoß vor Abschalten
- E: Abschalten des Heißgetränkegeräts
- F: Wahl der Angaben
- G: Reinigung unter Voreinstellung
- H: Abfrage des Verschmutzungsgrades
- I: Zubereitung Getränk
- J: Reinigungsdampfstoß nach getroffener Wahl

- W: Intensität des Reinigungsdampfstoßes
- X: Getränkeanzahl
- Y: Dauer des Reinigungsdampfstoßes
- Z: Getränketyp

## Patentansprüche

1. Verfahren zum Betrieb eines Heißgetränkezubereitungsgeräts, das eine Dampferzeugungseinrichtung und einen Milchaufschäumer hat, mit den folgenden Schritten:
a) Zubereiten von Milch und/oder Milchschaum (C; I)
b) Reinigen des Milchaufschäumers mithilfe eines Reinigungsdampfstoßes (J), **dadurch gekennzeichnet, dass** der Reinigungsdampfstoß einstellbar ist.

2. Verfahren nach Anspruch 1, **gekennzeichnet durch** einen Schritt i) vor dem Schritt b), in dem eine Angabe berücksichtigt wird, dass der Reinigungsdampfstoß zur Reinigung in Schritt b) unmittelbar nach der Zubereitung eines Getränks durchgeführt wird oder unterbleibt (B).

3. Verfahren nach einem der obigen Ansprüche, **dadurch gekennzeichnet, dass** vor dem Schritt b) in einem Schritt ii) eine Angabe zur Intensität (W) des Reinigungsdampfstoßes berücksichtigt wird.

4. Verfahren nach einem der obigen Ansprüche, **dadurch gekennzeichnet, dass** vor dem Schritt b) in einem Schritt iii) eine Angabe zur Dauer (Y) des Reinigungsdampfstoßes berücksichtigt wird.

5. Verfahren nach einem der obigen Ansprüche, **dadurch gekennzeichnet, dass** die Angaben in den Schritten i) und/oder ii) und/oder iii) in Abhängigkeit von einem Getränketyp (Z) gewählt werden und/oder von einer Anzahl an zubereiteten Getränken (X), nach der der Schritt b) erfolgen soll.

6. Verfahren nach Anspruch 1, **dadurch gekennzeichnet, dass** nach dem Schritt a) in einem Schritt iv) die Angabe berücksichtigt wird, dass das Heißgetränkezubereitungsgerät ausgeschaltet werden soll und daraufhin vor dem Ausschalten (E) die beiden folgenden Schritte durchgeführt werden:
c) Abfrage des Verschmutzungsgrades (H) und
d) Durchführen eines geräteseitig festeingestellten Dampfstoßes bei ausreichendem Verschmutzungsgrad (D).

7. Verfahren nach einem der obigen Ansprüche, **dadurch gekennzeichnet, dass** die Angaben jeweils benutzerseitig und/oder geräteseitig erfolgen.

8. Heißgetränkezubereitungsgerät, insbesondere für Haushaltsanwendungen, zur Durchführung des obigen Verfahrens mit einer Dampferzeugniseinrichtung, mit einem Milchaufschäumer, der sich mit einem Reinigungsdampfstoß reinigen lässt, und mit einem Ventil und einer Steuerungseinrichtung, **dadurch gekennzeichnet, dass** die Steuerungseinrichtung zur Steuerung des Reinigungsdampfstoßes benutzerseitig bedienbar ist.
